# EUROPÄISCHE PATENTSCHRIFT

(11) **EP 1 755 386 B1**
(45) Veröffentlichungstag und Bekanntmachung des Hinweises auf die Patenterteilung: **22.06.2016**
(21) Anmeldenummer: 05751626.2
(22) Anmeldetag: 21.05.2005
(51) Int. Cl.: A01N 25/30, A01N 25/20

(54) **SCHAUMARME WASSRIGE FORMULIERUNGEN FÜR DEN PFLANZENSCHUTZ**
LOW-FOAMING AQUEOUS FORMULATIONS USED FOR CROP PROTECTION
FORMULATIONS AQUEUSES FAIBLEMENT MOUSSANTES POUR LA PROTECTION PHYTOSANITAIRE

(30) Priorität: 01.06.2004 DE 102004026938
(43) Veröffentlichungstag der Anmeldung: 28.02.2007
(73) Patentinhaber: Bayer Intellectual Property GmbH, 40789 Monheim am Rhein (DE)
(72) Erfinder: FRISCH, Gerhard, 61273 Wehrheim (DE); SCHNABEL, Gerhard, 63820 Elsenfeld (DE); RUDE, Janine, 65830 Kriftel (DE)
(74) Vertreter: BIP Patents
(86) Internationale Anmeldenummer: PCT/EP2005/005525
(87) Internationale Veröffentlichungsnummer: WO 2005/117580

(56) Entgegenhaltungen:
- EP-A- 0 048 436
- EP-A- 0 336 151
- EP-A- 0 402 769
- EP-A- 0 407 874
- EP-A- 0 413 267
- EP-A1- 0 812 608
- WO-A-00/08925
- WO-A-95/00017
- WO-A-03/065803
- WO-A-2005/054370
- DE-A1- 3 427 078
- DATABASE WPI Section Ch, Week 199544 Derwent Publications Ltd., London, GB; Class A97, AN 1995-340134 XP002363827 & JP 07 233001 A (TAKEDA CHEM IND LTD) 5. September 1995 (1995-09-05)
- WACKER SILFOAM SE, [Online] Seiten 1/1-1/2, XP002363684 Gefunden im Internet: URL:http://www.drawin.com/dasat/images/6/1 00376-silfoam-se-2-de.pdf> [gefunden am 2006-01-19]
- WACKER SILFOAM SH, [Online] Seite 1/1, XP002363685 Gefunden im Internet: URL:http://www.drawin.com/dasat/images/3/1 00363-silfoam_sh_en.pdf> [gefunden am 2006-01-20]

## Beschreibung

Die Erfindung betrifft das technische Gebiet der Zubereitungen (Formulierungen) für Wirkstoffe auf dem Pflanzenschutzgebiet (agrochemische Wirkstoffe), vorzugsweise wäßrige Formulierungen von wasserlöslichen Pflanzenschutzmitteiwirkstoffen, insbesondere wäßrige Formulierungen von salzartigen Pflanzenschutzmittelwirkstoffe, ganz besonders Glufosinate-ammonium. Außerdem betrifft die Erfindung Mischungen von Adjuvantien, welche in Kombination mit den genannten Pflanzenschutzmittelwirkstoffen und deren Formulierungen eingesetzt werden können.
Wäßrige Formulierungen von Glufosinate-ammonium sind beispielsweise bekannt aus EP-A-0048436, EP-A-00336151, EP-A-0402769 und EP-A-1093722. Aufgrund der in den
Formulierungen enthaltenen wirkungsverstärkenden Tensiden zeigen die Formulierungen bei der Verdünnung mit Wasser vor der Applikation und beim Versprühen während der Applikation ein ungünstiges Schaumverhalten, wenn keine Entschäumer zugesetzt werden. Die Folgen sind dann oft ein Überlaufen der Spritzapparaturen, Verschmutzungen der Umwelt, unregelmäßige Spritzbeläge auf den Pflanzen und Rückstände von Pflanzenschutzmitteln in den Spritzapparaturen. Gemäß EP-A-0407874 sind für wäßrige flüssige Pflanzenschutzmittel wirksame Entschäumer aus der Gruppe der Perfluoralkylphosphinsäuren oder -alkylphosphonsäuren vorgeschlagen worden. Derartige Entschäumer (z. B. ®Fluowet PP von Clariant) zeichnen sich durch eine hohe Entschäumerwirkung bei vergleichsweise niedriger Aufwandmenge aus, wobei die Entschäumerwirkung auch bei längerer Lagerung bei unterschiedlichen Temperaturen und bei mechanischer Beanspruchung der Formulierungen stabil bleibt. Darüber hinaus wird die biologische Wirksamkeit der formulierten Pflanzenschutzmittel durch den Gehalt an Entschäumer nicht beeinträchtigt.

Die bekannten fluorhaltigen Entschäumer sind jedoch nicht für alle Anwendungsgebiete gleichermaßen geeignet. Beispielsweise ist bei vielen derartigen Formulierungen die entschäumende Wirkung vom Härtegrad des Wassers (dem Gehalt an Calcium- und Magnesiumsalzen) abhängig, das für die Herstellung der Spritzbrühen verwendet wird. Auch aus allgemeinen ökotoxikologische Erwägungen, wonach die Menge an fluorhaltigen Kohlenwasserstoffen in der Umwelt reduziert werden soll, besteht ein Bedarf nach alternativen Entschäumern, welche die Herstellung schaumarmer Formulierungen von Pflanzenschutzmittelwirkstoffen mit guten anwendungstechnischen Eigenschaften, beispielsweise guter Lagerstabilität und gleichmäßiger und hoher biologischer Wirksamkeit, ermöglichen.

Entschäumer auf Silikonbasis sind ebenfalls als hochwirksame Entschäumer bekannt. Sie weisen jedoch teilweise anwendungstechnische Nachteile auf, die ihren Einsatz für Formulierungen wäßriger Lösungen von polaren Pflanzenschutzmittelwirkstoffen, insbesondere salzartigen Wirkstoffe wie Glufosinate-ammonium wenig geeignet erscheinen lassen. So sind einige Entschäumer in den wäßrigen Formulierungen schlecht löslich und scheiden sich ab in Form von Eintrübungen, Ausflockungen oder Phasentrennungen. Weitere Entschäumer dieser Art zeigen nach Lagerung der Formulierung bei Raumtemperatur oder bei erhöhter Temperatur bis beispielsweise 50°C keine ausreichende Entschäumerwirkung mehr.

In der genannten EP-A-0407874 sind zahlreiche Beispiele für bekannte Entschäumer auf Silikonbasis erwähnt, die keine oder nur wenig brauchbare Eigenschaften als Entschäumer für wäßrige Pflanzenschutzmittel von salzartigen Wirkstoffen aufweisen.

Auch führt ein Ersatz der Entschäumer in vielen bekannten Formulierungen von Pflanzenschutzmitteln durch andere Entschäumer erfahrungsgemäß und gemäß eigenen Versuchen häufig dazu, dass die biologische Wirksamkeit der Formulierungen deutlich vermindert wird.
Es bestand deshalb die Aufgabe, Entschäumer für wäßrige Formulierungen von salzartigen wasserlöslichen Pflanzenschutzmitteln bereitzustellen, welche die genannten Nachteile vermeiden oder reduzieren und mit einem oder mehreren Vorteilen eingesetzt werden können.
Überraschenderweise wurde nun gefunden, dass verschiedene Entschäumer auf Silikonbasis in den obengenannten Formulierungen von salzartigen Pflanzenschutzmittelwirkstoffen unerwartet gute anwendungstechnische Eigenschaften aufweisen, insbesondere nicht nur gut entschäumen, sondern auch Formulierungen ergeben, welche eine vergleichsweise hohe biologische Wirksamkeit beim bestimmungsgemäßen Einsatz aufweisen.
Gegenstand der Erfindung sind daher flüssige wäßrige Pflanzenschutzmittel von wasserlöslichen Pflanzenschutzmittelwirkstoffen, dadurch gekennzeichnet, dass sie
(a) 1 bis 40-Gew. % eines oder mehrerer in Wasser löslicher Pflanzenschutzmittelwirkstoffe (Wirkstoffe vom Typ (a)),
(b) 0 bis 40-Gew. % eines oder mehrerer in Wasser unlöslicher Pflanzenschutzmittelwirkstoffe (Wirkstoffe vom Typ (b)),
(c) 0 bis 50 Gew.-% polare organische Lösungsmittel,
(d) 1 bis 80 Gew.-% anionaktive Tenside,
(e) 0 bis 20 Gew.-% nichtionogene, kationaktive und/oder zwitterionische Tenside,
(f) 0,02 bis 10 Gew.-% Entschäumer auf Silikonbasis aus der Gruppe der linearen Polydimethylsiloxane mit einer mittleren dynamischen Viskosität, gemessen bei 25 °C, im Bereich von 1000 bis 8000 mPas und mit einem Gehalt an Kieselsäure,
(g) 0 bis 30 Gew.-% andere übliche Formulierungshilfsmittel und
(h) 0,1 bis 90 Gew.-% Wasser
   enthalten.

Die erfindungsgemäßen entschäumerhaltigen wäßrigen Formulierungen eignen sich vorzugsweise für Wirkstoffe vom Typ (a) aus der Gruppe der salzhaltigen wasserlöslichen Wirkstoffe wie Glufosinate(salze), Glyphosate(salze), Paraquat, Diquat und ähnliche, insbesondere Glufosinate-ammonium.
Die erfindungsgemäßen Formulierungen können darüber hinaus auch Wirkstoffe vom Typ (b) enthalten, die in Wasser weitgehend unlöslich sind, beispielsweise Herbizide aus der Gruppe der Diphenylether wie Oxyfluorfen, Carbamate, Thiocarbamate, Triphenylzinn- und Tributylzinnverbindungen, Halogenacetanilide, Phenoxyphenoxyalkancarbonsäurederivate sowie Heteroaryloxyphenoxyalkancarbonsäurederivate, wie Chinolyloxy-, Chinoxalyloxy-, Pyridyloxy-, Benzoxalyloxy- und Benzthiazolyloxyphenoxyalkancarbonsäureester, beispielsweise Diclofop-methyl, Fenoxaprop-ethyl oder Fenoxaprop-P-ethyl.
Auch entsprechend unlösliche Wirkstoffe aus Stoffklassen, welche normalerweise Wirkstoffe unterschiedlicher Löslichkeiten enthalten kommen in Frage, z.B. Wirkstoffe aus der Gruppe der Cyclohexandionabkömmlinge, Imidazolinone, Pyrimidyloxypyridincarbonsäure-derivate, Pyrimidyloxy-benzoesäure-derivate, Sulfonylharnstoffe, Triazolopyrimidin-sulfonamid-derivate sowie S-(N-Aryl-N-alkylcarbamoylmethyl)-dithiophosphor-säureester,
Die genannten Kurzbezeichnungen für Wirkstoffe ("common names") wie Glufosinate, Glyphosate, Oxyfluorfen, Diclofop-methyl, Fenoxaprop-(P-)ethyl u.a. sind dem Fachmann bekannt; siehe z.B. "The Pesticide Manual" British Crop Protection Council 2003; die Bezeichnungen umfassen dabei die bekannten Derivate wie Salze von Glufosinate und Glyphosate, insbesondere die handelsüblichen Formen.

Entsprechend können auch Wirkstoffe aus der Gruppe der Safener, Wachstumsregulatoren, Insektizide und Fungizide als Komponente (b) bzw. bei guter Wasserlöslichkeit als Komponenten (a) in Frage kommen.

Die Art der verwendeten Wirkstoffe vom Typ (a) und (b) bestimmen den Typ der Schadorganismen, welche durch die Anwendung der Pflanzenschutzmittel oder agrochemischen Formulierungen kontrolliert werden können. Im Falle von Herbiziden sind die Schadorganismen unerwünschte Pflanzen.

Bevorzugt sind Formulierungen mit Wirkstoffen vom Typ (a) aus der Gruppe enthaltend eine oder mehrere Verbindungen der Formel (1) oder deren Salze, 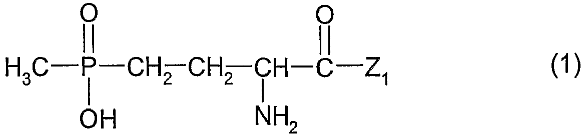 worin
Z₁ einen Rest der Formel -OM, -NHCH(CH₃)CONHCH(CH₃)CO₂M oder -NHCH(CH₃)CONHCH[CH₂CH(CH₃)₂]CO₂M und dabei
M = H oder ein Salz bildendes Kation bedeuten,
und/oder eine oder mehrere Verbindungen der Formel (2) oder deren Salze, 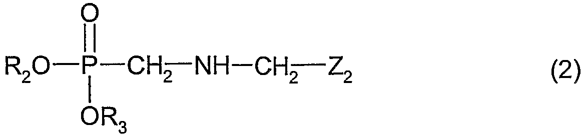 worin
Z₂ einen Rest der Formel CN oder CO₂R₁ bedeutet, in dem R₁ = Q oder ein Salz bildendes Kation ist und dabei Q = H, Alkyl, Alkenyl, Alkoxyalkyl oder C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, und
R₂,R₃ jeweils unabhängig voneinander H, Alkyl, C₆-C₁₀-Aryl, das unsubstituiert oder substituiert ist und vorzugsweise unsubstituiert oder durch einen oder mehrere Reste aus der Gruppe Alkyl, Alkoxy, Halogen, CF₃, NO₂ und CN substituiert ist, oder Biphenyl oder ein Salz bildendes Kation bedeuten.

Vorzugsweise haben die kohlenstoffhaltigen Reste in Zusammenhang mit Q, R₂ bzw. R₃ bis zu 10 C-Atomen, insbesondere bis zu 6 C-Atomen.

Die Verbindungen der Formel (1) enthalten ein asymmetrisches C-Atom. Das L-Enantiomere wird dabei als biologisch aktives Isomer angesehen. Die Formel (1) umfaßt daher alle Stereoisomeren und deren Gemische, insbesondere das Racemat und das jeweils biologisch wirksame Enantiomer. Beispiele für Wirkstoffe der Formel (1) sind folgende:
◆ Glufosinate und dessen Ammoniumsalz in racemischer Form, d.h. 2-Amino-4-[hydroxy(methyl)phosphinoyl]-butansäure bzw. dessen Ammoniumsalz,
◆ das L-Enantiomer von Glufosinate und dessen Ammoniumsalz,
◆ Bilanafos/Bialaphos, d.h. L-2-Amino-4-[hydroxy(methyl)phosphinoyl]-butanoyl-L-alaninyl-L-alanin und dessen Natriumsalz.

Das Racemat von Glufosinate-ammonium wird alleine üblicherweise in Dosierungen ausgebracht, die zwischen 200 und 1000 g a.i./ha (=Gramm Aktivsubstanz pro Hektar) liegen. Glufosinate-ammonium ist in diesen Dosierungen vor allem dann wirksam, wenn es über grüne Pflanzenteile aufgenommen wird; siehe "The Pesticide Manual" 13th Edition, British Crop Protection Council 2003. Glufosinate-ammonium wird vorwiegend zur Bekämpfung von Unkräutern und Ungräsern in Plantagenkulturen und auf Nichtkulturland sowie mittels spezieller Applikationstechniken auch zur Zwischenreihenbekämpfung in landwirtschaftlichen Flächenkulturen wie Mais, Baumwolle u.a. eingesetzt. Zunehmende Bedeutung hat auch der Einsatz in transgenen Kulturen, welche gegenüber dem Wirkstoff resistent oder tolerant sind.

Bei den Verbindungen der Formel (2) handelt es sich um N-(Phosphonoalkyl)-glycin und damit um Derivate der Aminosäure Glycin. Die herbiziden Eigenschaften von N-(Phosphonomethyl)-glycin ("Glyphosate") sind z. B. in der US-Patentschrift Nr. 3799758 beschrieben.
In der Regel wird Glyphosate in Pflanzenschutzformulierungen in Form der wasserlöslichen Salze verwendet, wobei im Zusammenhang mit der vorliegenden Erfindung vor allem das Isopropylammoniumsalz von Bedeutung ist; siehe "The Pesticide Manual" 13th Edition, British Crop Protection Council 2003.

Im Zusammenhang mit der vorliegenden Erfindung bezeichnet der Begriff "polare organische Lösungsmittel" (Komponente (c)) beispielsweise polare protische oder aprotische polare Lösungsmittel und deren Mischungen. Beispiele für Lösungsmittel im Sinne der Erfindung sind
◆ aliphatische Alkohole, wie z.B. niedere Alkanole wie Methanol, Ethanol, Propanol, Isopropanol und Butanol, oder mehrwertige Alkohole wie Ethylenglykol, Glycerin,
◆ polare Ether wie Tetrahydrofuran (THF), Dioxan, Alkylenglykolmonoalkyether und -dialkylether wie z.B.
   Propylenglykolmonomethylether, Propylenglykolmonoethylether, Ethylenglykolmonomethylether oder -monoethylether, Diglyme und Tetraglyme;
◆ Amide wie Dimethylformamid (DMF), Dimethylacetamid, Dimethylcaprylamid, Dimethylcaprinamid (^{®}Hallcomide) und N-Alkylpyrrolidone;
◆ Ketone wie Aceton;
◆ Ester auf Basis von Glycerin und Carbonsäuren wie Glycerinmono-, di- und triacetat,
◆ Lactame;
◆ Kohlensäurediester;
◆ Nitrile wie Acetonitril, Propionitril, Butyronitril und Benzonitril;
◆ Sulfoxide und Sulfone wie Dimethylsulfoxid (DMSO) und Sulfolan.

Häufig eignen sich auch Kombinationen verschiedener Lösungsmittel, die zusätzlich Alkohole wie Methanol, Ethanol, n- und i-Propanol, n-, i-, t- und 2-Butanol enthalten.

Im Falle einphasiger wäßrig-organischer Lösungen kommen die ganz oder weitgehend wassermischbaren Lösungsmittel oder Lösungsmittelgemische in Frage.

Bevorzugte organische Lösungsmittel im Sinne der vorliegenden Erfindung sind polare organische Lösungsmittel wie N-Methylpyrrolidon und Dowanol^{®} PM (Propylenglykol-monomethylether).

Die erfindungsgemäßen Formulierungen enthalten als Komponente (d) anionaktive oberflächenaktive Verbindungen (anionaktive Tenside). Beispiele für anionaktive Tenside sind (wobei EO=Ethylenoxid-Einheiten, PO=Propylenoxid-Einheiten und BO=Butylenoxid-Einheiten bedeuten):
d1) Anionische Derivate von Fettalkoholen mit 10 - 24 Kohlenstoffatomen mit 0-60 EO und/oder 0-20 PO und/oder 0-15 BO in beliebiger Reihenfolge in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis) wie Genapol^{®}LRO, Sandopan^{®}-Marken, Hostaphat/Hordaphos^{®}-Marken von Clariant;
d2) anionische Derivate von Copolymeren bestehend aus EO-, PO- und/oder BO-Einheiten mit einem Molekulargewicht von 400 bis 10⁸ in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
d3) anionische Derivate von Alkylenoxydaddukten von C₁ - C₉ Alkoholen in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
d4) anionische Derivate von Fettsäure-alkoxylaten in Form von Ethercarboxylaten, Sulfonaten, Sulfaten und Phosphaten und deren anorganischen (z.B Alkali und Erdalkali) und organischen Salzen (z.B. auf Amin- oder Alkanolaminbasis);
d5) Salze von aliphatischen, cycloaliphatischen und olefinischen Carbonsäuren und Polycarbonsäuren, sowie Alpha-Sulfofettsäureester wie von Henkel erhältlich;
d6) Sulfosuccinate, Alkansulfonate, Paraffin- und Olefinsulfonate wie Netzer IS^{®}, Hoe^{®}S1728, Hostapur^{®}OS, Hostapur^{®}SAS von Clariant, Triton^{®}GR7ME und GR5 von Union Carbide, Empimin^{®}-Marken von Albright und Wilson, Marlon^{®}-PS65 von Condea.

Bevorzugte anionaktive Tenside sind Alkylpolyglykolethersulfate, insbesondere Fettalkoholdiethylenglykolethersulfat (z. B. Genapol LRO^{®}, Clariant), oder Alkylpolyglykolethercarboxylate (z. B. 2-(Isotridecyloxy-polyethylenoxy)-ethyl-carboxymethyl-ether, Marlowet 4538^{®}, Hüls)

Die erfindungsgemäßen Formulierungen können gegebenenfalls nichtionogene und/oder kationaktive Tenside als Komponente (e) enthalten.

Beispiele für nichtionogene Tenside (zur Tensidkomponente e) sind:
e1) Fettalkohole mit 10-24 Kohlenstoffatomen mit 0-60 EO und/oder 0-20 PO und/oder 0-15 BO in beliebiger Reihenfolge. Beispiele für derartige Verbindungen sind Genapol^{®}C-, L-, O-, T-, UD-, UDD-, X-Marken von Clariant, Plurafac^{®}- und Lutensol^{®}A-, AT-, ON-, TO-Marken von BASF, Marlipal^{®}24 und 013 Marken von Condea, Dehypon^{®}-Marken von Henkel, Ethylan^{®}-Marken von Akzo-Nobel wie Ethylan CD 120;
e2) Fettsäure- und Triglyceridalkoxylate wie die Serdox^{®}NOG-Marken von Condea oder die Emulsogen^{®}-Marken von Clariant;
e3) Fettsäureamidalkoxylate wie die Comperlan^{®}-Marken von Henkel oder die Amam^{®}-Marken von Rhodia;
e4) Alkylenoxydaddukte von Alkindiolen wie die Surfynol^{®}-Marken von Air Products; Zuckerderivate wie Amino- und Amidozucker von Clariant,
e5) Glukitole von Clariant,
e6) Alkylpolyglycoside in Form der APG^{®}-Marken von Henkel;
e7) Sorbitanester in Form der Span^{®}- oder Tween^{®}-Marken von Uniqema;
e8) Cyclodextrinester oder -ether von Wacker;
e9) Oberflächenaktive Cellulose- und Algin-, Pektin- und Guarderivate wie die Tylose^{®}-Marken von Clariant, die Manutex^{®}-Marken von Kelco und Guarderivate von Cesalpina;
e10) Alkylenoxydaddukte auf Polyolbasis wie Polyglykol^{®}-Marken von Clariant;
e11) Grenzflächenaktive Polyglyceride und deren Derivate von Clariant.

Beispiele für kationaktive Tenside (zur Tensidkomponente e) sind Alkylenoxidaddukte von Fettaminen und entsprechende quartäre AmmoniumVerbindungen mit 8 bis 22 Kohlenstoffatomen wie z.B. die Genamin^{®} C-, L-, O-, T-Marken von Clariant.

Möglich sind gegebenenfalls auch oberflächenaktive, zwitterionische Verbindungen wie Tauride, Betaine und Sulfobetaine in Form von Tegotain^{®}-Marken von Goldschmidt, Hostapon^{®}T- und Arkopon^{®}T-Marken von Clariant (zur Tensidkomponente e).

Die erfindungsgemäßen Formulierungen enthalten Entschäumer der Komponente (f), welche Entschäumer aus der Gruppe der linearen Polydimethylsiloxane mit einer mittleren dynamischen Viskosität, gemessen bei 25 °C, im Bereich von 1000 bis 8000 mPas (mPas = Millipascalsekunde), vorzugsweise 1200 bis 6000 mPas, und mit einem Gehalt an Kieselsäure darstellen. Unter Kieselsäure sind beispielseweise Formen/Modifikationen wie Polykieselsäuren, Metakieselsäure, Orthokieselsäure, Kieselgel, Kieselsäuregele, Kieselgur, gefälltes SiO₂ etc. zu verstehen.

Entschäumer aus der Gruppe der linearen Polydimethylsiloxane enthalten als chemisches Gerüst eine Verbindung der Formel HO-[Si(CH₃)₂-O-]ₙ-H, wobei die Endgruppen modifiziert, beispielsweise verethert oder in der Regel mit den Gruppen -Si(CH₃)₃ verbunden sind.

Der Gehalt an Kieselsäure kann in einem weiten Bereich modifiziert werden und liegt in der Regel im Bereich von 0,1 bis 10 Gewichtsprozent, vorzugsweise 0,2 bis 5 Gewichtsprozent, insbesondere 0,2 bis 2 Gew.-%, Kieselsäure bezogen auf das Gewicht an Polydimethylsiloxan.

Beispiele für derartige Entschäumer sind ®Rhodorsil Antifoam 416 (Rhodia) und ®Rhodorsil Antifoam 481 (Rhodia).

®Rhodorsil Antifoam 416 ist ein mittelviskoses Silikonöl mit einer dynamischen Viskosität bei 25 °C von etwa 1500 mPas und einem Gehalt an einem Tensid und Kieselsäure. Aufgrund des Tensidgehalts ist die Dichte gegenüber dem reinen Silikonöl reduziert und beträgt etwa 0,995 g/cm³.

®Rhodorsil Antifoam 481 ist ein mittelviskoses Silikonöl mit einer dynamischen Viskosität bei 25 °C von etwa 4500 mPas und einem Gehalt an Kieselsäure. Die Dichte beträgt etwa 1,045 g/cm³.

Die Silikonöle können auch als Emulsionen eingesetzt werden.

Bevorzugt ist die Verwendung von mittelviskosen Entschäumern auf Basis von Polydimethylsiloxanen mit einer dynamischen Viskosität, gemessen bei 25 °C, im Bereich von 2000 bis 5000 mPas, vorzugsweise 4000 bis 5000 mPas, und mit einem Gehalt an Kieselsäure, insbesondere ®Rhodorsil Antifoam 481.

Übliche Formulierungshilfsmittel (g) sind beispielsweise Inertmaterialien, wie Haft-, Netz-, Dispergier-, Emulgier-, Penetrations-, Konservierungs- und Frostschutzmittel, Füll-, Träger- und Farbstoffe, Verdunstungshemmer und den pH-Wert (Puffer, Säuren und Basen) oder die Viskosität beeinflussende Mittel (z. B. Verdicker).

Die zur Herstellung der o.a. Formulierungen notwendigen Hilfsmittel wie insbesondere Tenside sind im Prinzip bekannt und werden beispielsweise beschrieben in: McCutcheon's "Detergents and Emulsifiers Annual", MC Publ. Corp., Ridgewood N.J.; Sisley and Wood, "Encyclopedia of Surface active Agents", Chem. Publ.Co.Inc., N.Y. 1964; Schönfeldt, "Grenzflächenaktive Äthylenoxidaddukte", Wiss. Verlagsgesellschaft, Stuttgart 1976; Winnacker-Küchler, "Chemische Technologie", Band 7, C. Hanser-Verlag, München, 4. Auflage 1986, und jeweils dort zitierte Literatur.

Mit Hilfe der Komponentenmischungen lassen sich demnach vorzugsweise konzentrierte schaumarme flüssige wäßrige Zubereitungen von salzartigen Pflanzenschutzmittelwirkstoffen, wie Glufosinate-ammonium, herstellen, welche
(a) 1 bis 40 Gew.-%, vorzugsweise 2 bis 30 Gew.-%, insbesondere 5 bis 20 Gew.-%, in Wasser lösliche Pflanzenschutzmittelwirkstoffe (Wirkstoffe vom Typ (a)),
(b) 0 bis 40 Gew.-%, vorzugsweise 0 bis 20 Gew.-%, insbesondere 0 bis 10 Gew.-% in Wasser unlösliche Pflanzenschutzmittelwirkstoffe (Wirkstoffe vom Typ (b)),
(c) 0 bis 50 Gew.-%, vorzugsweise 0 bis 30 Gew.-%, insbesondere 0 bis 20 Gew.-% polare organische Lösungsmittel,
(d) 1 bis 80 Gew.-%, vorzugsweise 5 bis 70 Gew.-%, insbesondere 6 bis 60 Gew.-% anionaktive Tenside,
(e) 0 bis 20 Gew.-%, vorzugsweise 0 bis 15 Gew.-%, nichtionogene, kationaktive und/oder zwitterionische Tenside,
(f) 0,02 bis 10 Gew.-%, vorzugsweise 0,05 bis 5 Gew.-%, insbesondere 0,1 bis 2 Gew.-% des erfindungsgemäß einzusetzenden Entschäumers mit einem Gehalt an Kieselsäure,
(g) 0 bis 30 Gew.-%, vorzugsweise 0 bis 20 Gew.-%, vorzugsweise 0 bis 15 Gew.-%, übliche Formulierungshilfsmittel,
(h) 0,1 bis 90 Gew.-%, vorzugsweise 5 bis 85 % Wasser, vorzugsweise 10 bis 60 % Wasser,
enthalten.

Das Gewichtsverhältnis der Wirkstoffe (a), z.B. Herbizide (a), zu den unter (d) genannten anionaktiven Tensiden ist - bezogen auf die jeweilige waschaktive Substanz (WAS) - ist in der Regel im Bereich von 1:0,1 bis 1:10, insbesondere 1:0,2 bis 1:8, insbesondere 1:0,2 bis 1:5.

Das Gewichtsverhältnis der Wirkstoffe (a), z.B. Herbizide (a), zu den unter (f) genannten Entschäumern ist in der Regel im Bereich von 1000:1 bis 1:1, vorzugsweise 500:1 bis 3:1, insbesondere 100:1 bis 5:1.

Das Gewichtsverhältnis der anionaktiven Tenside (d) zu den unter (f) genannten Entschäumern ist in der Regel im Bereich von 2000:1 bis 1:1, vorzugsweise 1000:1 bis 5:1, insbesondere 500:1 bis 10:1.

Weiter bevorzugt sind auch wäßrige, vorzugsweise einphasige, Lösungen, welche
(a) 1 bis 40 Gew.-%, vorzugsweise 2 bis 30 Gew.-%, insbesondere 5 bis 20 Gew.-%, in Wasser lösliche Wirkstoffe vom genannten Typ (a), vorzugsweise Glufosinate-ammonium,
(c) 0 bis 40 Gew.-%, vorzugsweise 0 bis 30 Gew.-%, insbesondere 0 bis 20 Gew.-% polare organische Lösungsmittel,
(d) 3 bis 80 Gew.-%, vorzugsweise 5 bis 70 Gew.-%, insbesondere 6 bis 60 Gew.-% anionaktive Tenside,
(e) 0 bis 20 Gew.-%, vorzugsweise 0 bis 15 Gew.-%, nichtionogene, kationaktive und/oder zwitterionische Tenside
(f) 0,02 bis 10 Gew.-%, vorzugsweise 0,05 bis 5 Gew.-%, insbesondere 0,1 bis 2 Gew.-% des erfindungsgemäß einzusetzenden Entschäumers mit einem Gehalt an Kieselsäure,
(g) 0 bis 30 Gew.-%, vorzugsweise 0 bis 20 Gew.-%, vorzugsweise 0 bis 15 Gew.-%, übliche Formulierungshilfsmittel,
(h) 0,1 bis 90 Gew.-%, vorzugsweise 5 bis 85 % Wasser, vorzugsweise 10 bis 60 % Wasser,
enthalten.

Die zur Herstellung der wäßrigen einphasigen Lösung zumischbaren Lösungsmittel sind vor allem unbegrenzt oder weitgehend mit Wasser mischbare organische Lösungsmittel wie beispielsweise N-Methylpyrrolidon (NMP), Dimethylformamid (DMF), Dimethylacetamid (DMA) oder Dowanol^{®} PM (Propylenglykolmonomethylether).
Übliche Formulierungshilfsmittel (g) sind beispielsweise die genannten Inertmaterialien, Frostschutzmittel, Verdunstungshemmer, Konservierungsmittel, Farbstoffe, u. a.; bevorzugte Formulierungshilfsmittel (g) sind
◆ Frostschutzmittel und Verdunstungshemmer wie Glycerin oder Ethylenglykol, z.B. in einer Menge von 2 bis 10 Gew.-% und
◆ Konservierungsstoffe, z.B. Mergal K9N^{®} (Riedel) oder Cobate C^{®}, Die Formulierungen können als übliche Formulierungshilfsmittel (g) auch zusätzlich Entschäumer anderer Art als die der Komponente (f) enthalten.
Die erfindungsgemäßen flüssigen Formulierungen können nach im Prinzip üblichen Verfahren hergestellt werden, d. h. durch Vermischen der Komponenten unter Rühren, Schütteln oder mittels statischer Mischverfahren. Die erhaltenen flüssigen Formulierungen sind stabil und gut lagerfähig.

Beschrieben sind auch schaumarme flüssige Adjuvantformulierungen, welche zur Herstellung der genannten konzentrierten Pflanzenschutzmittelformulierungen oder zur Herstellung von Tank-Mischungen mit Pflanzenschutzwirkstoffformulierungen verwendet werden können oder auch separat, gleichzeitig oder sequentiell mit der Applikation von Wirkstoffen (vorzugsweise den genannten Wirkstoffen (a)) auf die Pflanzen oder auf den Boden, auf oder in dem die Pflanzen heranwachsen, appliziert werden können.
Derartige Adjuvantformulierungen sind dadurch gekennzeichnet, dass sie
(c) gegebenenfalls polare organische Lösungsmittel,
(d) anionaktive Tenside,
(e) gegebenenfalls nichtionogene, kationaktive und/oder zwitterionische Tenside,
(f) Entschäumer auf Silikonbasis aus der Gruppe der linearen Polydimethylsiloxane mit einer mittleren dynamischen Viskosität, gemessen bei 25 °C, im Bereich von 1000 bis 8000 mPas und mit einem Gehalt an Kieselsäure,
(g) gegebenenfalls andere übliche Formulierungshilfsmittel und
(h) Wasser
enthalten, wobei die Komponenten (c), (d), (e), (f), (g) und (h) wie im Falle der oben genannten Wirkstoff enthaltenden Pflanzenschutzmittelformulierungen definiert sind.

Bevorzugte flüssige Adjuvantformulierungen enthalten
(c) 0 bis 60 Gew.-%, vorzugsweise 0 bis 40 Gew.-%, insbesondere 0 bis 30 Gew.-% polare organische Lösungsmittel,
(d) 3 bis 85 Gew.-%, vorzugsweise 6 bis 80 Gew.-%, insbesondere 8 bis 70 Gew.-% anionaktive Tenside,
(e) 0 bis 25 Gew.-%, vorzugsweise 0 bis 20 Gew.-%, nichtionogene, kationaktive und/oder zwitterionische Tenside,
(f) 0,02 bis 15 Gew.-%, vorzugsweise 0,05 bis 10 Gew.-%, insbesondere 0,1 bis 5 Gew.-% des erfindungsgemäß einzusetzenden Entschäumers mit einem Gehalt an Kieselsäure,
(g) 0 bis 40 Gew.-%, vorzugsweise 0 bis 30 Gew.-%, vorzugsweise 0 bis 20 Gew.-%, übliche Formulierungshilfsmittel,
(h) 0,1 bis 95 Gew.-%, vorzugsweise 5 bis 90 % Wasser, vorzugsweise 10 bis 70 % Wasser,
enthalten.

Die flüssigen, Wirkstoff enthaltenden Formulierungen bzw. die Adjuvantformulierungen sind schaumarm und lagerfähig. Sie weisen in der Regel bei ihrer Anwendung vielfach sehr günstige technische Eigenschaften auf. Beispielsweise zeichnen sich die Formulierungen durch geringe Schaumneigung bei Verdünnen mit Wasser aus, z. B. bei der Herstellung von Tankmischungen oder bei der Anwendung der Formulierungen im Spritzverfahren. Die Formulierungen mit Wirkstoff bzw. die Adjuvantformulierungen bei der Anwendung zusammen mit Wirkstoffen/Wirkstoffformulierungen weisen außerdem eine vergleichsweise sehr gute biologische Wirkung aus, wenn man die Wirkung mit Formulierungen vergleicht, welche mit anderen Entschäumern auf Silikonbasis hergestellt worden sind.

Folglich eignen sich die erfindungsgemäßen Formulierungen in besonderem Maße zur Anwendung im Pflanzenschutz, bei dem die Formulierungen auf die Pflanzen, Pflanzenteile oder die Anbaufläche appliziert werden.
Im Falle von herbiziden Wirkstoffen (a) und/oder (b) eignen sich die Formulierungen sehr gut zur Bekämpfung unerwünschten Pflanzenwuchses sowohl im Nichtkulturland als auch in toleranten Kulturen.

In den folgenden Beispielen beziehen sich Mengenangaben auf das Gewicht, sofern nichts anderes angegeben ist. Die Beispiele der Tabellen 1 und 2 betreffen erfindungsgemäße stabile Zusammensetzungen. In Tabelle 3 sind Vergleichsformulierungen genannt. Tabellen 4 und 5 enthalten Ergebnissen von Entschäumertests.

**Tabelle 1: Formulierungen (erfindungsgemäß)**

| | 1⁽¹⁾ | 2 | 3 | 4 | 5 | 6 | 7 | 8 |
|---|---|---|---|---|---|---|---|---|
| Glufosinate-ammonium (AS) | 18,00 | 18,00 | 14,00 | 14,00 | 12,00 | 12,00 | 6,00 | 6,00 |
| C₁₂/C₁₄-O-(EO)₂-SO₃⁻Na^{+ (2)} | 21,00 | 21,00 | 42,00 | 42,00 | 12,60 | 12,60 | 6,30 | 6,30 |
| Propylenglykolmonomethylether | 10,00 | 10,00 | 10,00 | 10,00 | 10,00 | 10,00 | - | - |
| Rhodorsil 481 ⁽³⁾ | 0,25 | 0,50 | 0,25 | 0,50 | 0,25 | 0,50 | 0,25 | 0,50 |
| Wasser ⁽⁵⁾ | ad 100 | ad 100 | ad 100 | ad 100 | ad 100 | ad 100 | ad 100 | ad 100 |

| | | | | | | | | |
|---|---|---|---|---|---|---|---|---|
| Abkürzungen in Tabelle 1: siehe nach Tabelle 3 | | | | | | | | |

**Tabelle 2: Formulierungen (erfindungsgemäß)**

| | 9 ⁽¹⁾ | 10 | 11 | 12 | 13 | 14 | 15 | 16 |
|---|---|---|---|---|---|---|---|---|
| Glufosinate-ammonium (AS) | 18,00 | 18,00 | 14,00 | 14,00 | 12,00 | 12,00 | 6,00 | 6,00 |
| C₁₂/C₁₄-O-(EO)₂-SO₃⁻Na^{+ (2)} | 21,00 | 21,00 | 42,00 | 42,00 | 12,60 | 12,60 | 6,30 | 6,30 |
| Propylenglykolmonomethylether | 10,00 | 10,00 | 10,00 | 10,00 | 10,00 | 10,00 | - | - |
| Rhodorsil 416 ⁽⁴⁾ | 0,25 | 0,50 | 0,25 | 0,50 | 0,25 | 0,50 | 0,25 | 0,50 |
| Wasser (ad 100%) ⁽⁵⁾ | ad 100 | ad 100 | ad 100 | ad 100 | ad 100 | ad 100 | ad 100 | ad 100 |

| | | | | | | | | |
|---|---|---|---|---|---|---|---|---|
| Abkürzungen in Tabelle 2: siehe nach Tabelle 3 | | | | | | | | |

**Tabelle 3: Vergleichsformulierungen**

| | 17 ⁽¹⁾ | 18 | 19 | 20 | 21 | 22 |
|---|---|---|---|---|---|---|
| Glufosinate-ammonium (AS) | 18,00 | 18,00 | 18,00 | 14,00 | 14,00 | 14,00 |
| C₁₂/C₁₄-O-(EO)₂-SO₃⁻Na^{+ (2)} | 21,00 | 21,00 | 21,00 | 42,00 | 42,00 | 42,00 |
| Propylenglykolmonomethylether | 10,00 | 10,00 | 10,00 | 10,00 | 10,00 | 10,00 |
| Antischaummittel SE 39 ⁽⁶⁾ | 0,50 | | | 0,50 | | |
| Antimussol 4459-2 ⁽⁷⁾ | | 0,50 | | | 0,50 | |
| Rhodorsil 1824 ⁽⁸⁾ | | | 0,50 | | | 0,50 |
| Wasser (ad 100%) ⁽⁵⁾ | ad 100 | ad 100 | ad 100 | ad 100 | ad 100 | ad 100 |

| | | | | | | |
|---|---|---|---|---|---|---|
| Abkürzungen in Tabellen 1 bis 3: AS Mengenangabe bezogen auf Aktivsubstanz (= active ingredient, a.i.) ⁽¹⁾ In den Spalten sind die Zusammensetzungen der Formulierungen 1 bis 8 (in Tabelle 1) bzw. 9 bis 16 (in Tabelle 2) bzw. 17 bis 22 (in Tabelle 3) angegeben, wobei die jeweilige Zeile die Menge der in der ersten Spalte bezeichneten Komponente in Gewichtsprozent enthält; ⁽²⁾ C₁₂/C₁₄-Fettalkoholdiethylenglykolethersulfat, Tensidmenge bezogen auf W.A.S = "waschaktive Substanz", (eingesetzt als ®Genapol LRO, Clariant) ⁽³⁾ ®Rhodorsil 481 (Polydimethylsiloxan mit Kieselgel, Rhodia) ⁽⁴⁾ ®Rhodorsil 416 (Polydimethylsiloxan mit Kieselgel und Tensid, Rhodia) ⁽⁵⁾ Die Menge an Wasser ist als ad 100% angegeben und schließt auch geringe Mengen an nicht wässrigen Nebenbestandteilen ein, welche in einigen eingesetzten Komponenten enthalten sein können, beispielsweise, Farbstoffe, Konservierungsstoffe, etc. ⁽⁶⁾ Antischaummittel EM SE 39 (Entschäumer-emulsion auf Silikonbasis ohne Kieselgel, Wacker) ⁽⁷⁾ ®Antimussol 4459-2 (Entschäumer-emulsion auf Silikonbasis ohne Kieselgel, Clariant) ⁽⁸⁾ ®Rhodorsil 1824 (Entschäumer-emulsion auf Silikonbasis ohne Kieselgel, Rhodia) | | | | | | |

### Schaumtest 1

Die jeweilige konzentrierte flüssige Pflanzenschutzformulierung wurde mit der angegebenen Konzentration unter Rühren auf eine 1 %ige Lösung verdünnt und der gebildete Schaum nach 10 sec und 30 min in Prozent der Füllmenge gemessen (CIPAC-Standard). Einige Ergebnisse sind in Tabelle 4 zusammengestellt.

**Tabelle 4 (zu Schaumtest 1)**

| | Formulierung Nr.¹ | | | | | | | | | |
|---|---|---|---|---|---|---|---|---|---|---|
| Schaumtest ² | 1 | 3 | 5 | 8 | 17 | 18 | 19 | 20 | 21 | 22 |
| Schaum (in %) nach 10 sec. für eine 1 %ige Lösung | 37 | 44 | 40 | 28 | 28 | 50 | 44 | 30 | 52 | 28 |
| Schaum (in %) nach 30 min. für eine 1 %ige Lösung | 1 | 0 | 2 | 0 | 12 | 30 | 28 | 28 | 48 | 20 |

| | | | | | | | | | | |
|---|---|---|---|---|---|---|---|---|---|---|
| Abkürzungen in Tabelle 4: ¹ Die Formulierungen sind gemäß Tabellen 1 bis 3 nummeriert ² Schaum nach CIPAC Standard | | | | | | | | | | |

### Schaumtest 2

Die jeweilige konzentrierte flüssige Pflanzenschutzformulierung wurde mit der 30 fachen Menge an Wasser im Spritztank (RAU-Sprayer 400 I Kapazität) verdünnt. Das Schaumverhalten wurde in Prozent bezogen auf das Volumen der Füllmenge nach bestimmten Zeitabständen unter Rühren bzw. Stehen gemessen. Wie die Versuche zeigten, weisen die erfindungsgemäßen Formulierungen gemäß Tabellen 1 und 2 ein günstiges Schaumverhalten auf. Außerdem treten keine unerwünschten Ausfällungen oder Flockungen der nicht wäßrigen Komponenten auf. Einige Versuchsergebnissen sind in Tabelle 5 zusammengestellt.

**Tabelle 5 (zu Schaumtest 2)**

| Formulierung¹ | Schaum nach Füllung | Schaum nach 5 min Rühren | Schaum nach 5 min Stehen |
|---|---|---|---|
| Formulierung Nr. 1 | 10 % | 5 % | 0 % |
| Formulierung Nr. 3 | 10 % | 3 % | 3 % |
| Formulierung Nr. 5 | 10 % | 4 % | 2 % |
| Formulierung Nr. 8 | 12 % | 5 % | 5 % |

| | | | |
|---|---|---|---|
| Abkürzungen in Tabelle 5: ¹Die Formulierungen sind gemäß Tabellen 1 bis 3 nummeriert | | | |

### Biologische Beispiele

Die Formulierungen gemäß Tabellen 1 und 2 wurden, wie im obigen Schaumtest gezeigt, mit Wasser verdünnt und mit einer Wasseraufwandmenge von 200 I/ha auf Nichtkulturland appliziert, das ein unter natürlichen Bedingungen aufgelaufenes Spektrum von Schadpflanzen enthielt. Die Bewertung nach 4 Wochen ergab, daß die grünen Teile der Schadpflanzen abgestorben waren und somit eine gute Kontrolle der Schadpflanzen erreicht worden war.

## Patentansprüche

1. Flüssige wäßrige Pflanzenschutzmittel, **dadurch gekennzeichnet, dass** sie
(a) 1 bis 40 Gew.-% eines oder mehrerer in Wasser löslicher Pflanzenschutzmittelwirkstoffe (Wirkstoffe vom Typ (a)),
(b) 0 bis 40 Gew.-% eines oder mehrerer in Wasser unlöslicher Pflanzenschutzmittelwirkstoffe (Wirkstoffe vom Typ (b)),
(c) 0 bis 50 Gew.-% polare organische Lösungsmittel,
(d) 1 bis 80 Gew.-% anionaktive Tenside,
(e) 0 bis 20 Gew.-% nichtionogene, kationaktive und/oder zwitterionische Tenside,
(f) 0,02 bis 10 Gew.-% Entschäumer auf Silikonbasis aus der Gruppe der linearen Polydimethylsiloxane mit einer mittleren dynamischen Viskosität, gemessen bei 25 °C, im Bereich von 1000 bis 8000 mPas und mit einem Gehalt an Kieselsäure,
(g) 0 bis 30 Gew.-% andere übliche Formulierungshilfsmittel und
(h) 0,1 bis 90 Gew.-% Wasser
enthalten.

2. Pflanzenschutzmittel nach Anspruch 1, **dadurch gekennzeichnet, dass** sie
(a) 1 bis 40 Gew.-% in Wasser lösliche Wirkstoffe vom genannten Typ (a),
(c) 0 bis 40 Gew.-% polare organische Lösungsmittel,
(d) 3 bis 80 Gew.-% anionaktive Tenside,
(e) 0 bis 20 Gew.-% nichtionogene, kationaktive und/oder zwitterionische Tenside,
(f) 0,02 bis 10 Gew.-% des Entschäumers mit einem Gehalt an Kieselsäure,
(g) 0 bis 30 Gew.-% übliche Formulierungshilfsmittel,
(h) 0,1 bis 90 Gew.-% Wasser,
enthalten.

3. Pflanzenschutzmittel nach einem der Ansprüche 1 oder 2, **dadurch gekennzeichnet, dass** der Wirkstoff vom Typ (a) Glufosinate-ammonium ist.

4. Pflanzenschutzmittel nach einem der Ansprüche 1 bis 3, **dadurch gekennzeichnet, dass** das Gewichtsverhältnis der Herbizide (a) zu den unter (d) genannten anionaktiven Tensiden ist - bezogen auf die jeweilige waschaktive Substanz (WAS) - im Bereich von 1:0,1 bis 1:10 ist.

5. Pflanzenschutzmittel nach einem der Ansprüche 1 bis 4, **dadurch gekennzeichnet, dass** das Gewichtsverhältnis der Herbizide (a) zu den unter (f) genannten Entschäumern im Bereich von 1000:1 bis 1:1 ist.

6. Pflanzenschutzmittel nach einem der Ansprüche 1 bis 5, **dadurch gekennzeichnet, dass** das Gewichtsverhältnis der anionaktiven Tenside (d) zu den unter (f) genannten Entschäumern im Bereich von 2000:1 bis 1:1 ist.

7. Verfahren zur Herstellung eines nach einem der Ansprüche 1 bis 6 definierten Pflanzenschutzmittels, **dadurch gekennzeichnet, dass** man die Komponenten (a) bis (g) und gegebenenfalls weitere Komponenten, die in der Formulierung enthalten sind, mit Wasser (Komponente (h)) vermischt.

8. Verfahren zur Bekämpfung von unerwünschtem Pflanzenwuchs, **dadurch gekennzeichnet, daß** man eine wirksame Menge eines Pflanzenschutzmittels gemäß einem der Ansprüche 1 bis 6, das ein oder mehrere herbizide Wirkstoffe enthält, auf die Pflanzen, Pflanzenteile oder die Anbaufläche appliziert.

9. Verwendung eines Entschäumers auf Silikonbasis aus der Gruppe der linearen Polydimethylsiloxane mit einer mittleren dynamischen Viskosität, gemessen bei 25 °C, im Bereich von 1000 bis 8000 mPas und mit einem Gehalt an Kieselsäure als Entschäumer für flüssige wäßrige Formulierungen von salzartigen wasserlöslichen Pflanzenschutzmittelwirkstoffen mit einem Gehalt an anionaktiven Tensiden.

10. Verwendung von Mitteln gemäß einem der Ansprüche 1 bis 6 im Pflanzenschutz oder für Applikationen im Nichtkulturland.

## Claims

1. A liquid aqueous crop protectant composition comprising
(a) 1% to 40% by weight of one or more water-soluble active crop protectant ingredients (type (a) active ingredients),
(b) 0 to 40% by weight of one or more water-insoluble active crop protectant ingredients (type (b) active ingredients),
(c) 0% to 50% by weight of polar organic solvents,
(d) 1% to 80% by weight of anionic surfactants,
(e) 0 to 20% by weight of nonionic, cationic and/or zwitterionic surfactants,
(f) 0.02% to 10% by weight of silicone-based defoamers from the group of the linear polydimethylsiloxanes having an average dynamic viscosity, measured at 25°C, in the range from 1000 to 8000 mPas, and containing silica,
(g) 0 to 30% by weight of other customary formulation assistants, and
(h) 0.1% to 90% by weight of water.

2. The crop protectant composition as claimed in claim 1, comprising
(a) 1% to 40% by weight of water-soluble active ingredients of the stated type (a),
(c) 0% to 40% by weight of polar organic solvents,
(d) 3% to 80% by weight of anionic surfactants,
(e) 0 to 20% by weight of nonionic, cationic and/or zwitterionic surfactants,
(f) 0.02% to 10% by weight of the silica-containing defoamer,
(g) 0 to 30% by weight of customary formulation assistants,
h) 0.1% to 90% by weight of water.

3. The crop protectant composition as claimed in either of claims 1 and 2, wherein the active ingredient of type (a) is glufosinate-ammonium.

4. The crop protectant composition as claimed in any one of claims 1 to 3, wherein the weight ratio of the herbicides (a) to the anionic surfactants specified under (d), based on the respective detersive ingredient (DTI), is in the range from 1:0.1 to 1:10.

5. The crop protectant composition as claimed in any one of claims 1 to 4, wherein the weight ratio of the herbicides (a) to the defoamers specified under (f) is in the range from 1000:1 to 1:1.

6. The crop protectant composition as claimed in any one of claims 1 to 5, wherein the weight ratio of the anionic surfactants (d) to the defoamers specified under (f) is in the range from 2000:1 to 1:1.

7. A process for preparing a crop protectant composition as defined in any one of claims 1 to 6, which comprises mixing components (a) to (g) and, optionally, further components present in the formulation with water (component (h)).

8. A method of controlling unwanted plant growth, which comprises applying an effective amount of a crop protectant composition as claimed in any one of claims 1 to 6, comprising one or more herbicidal active ingredients, to the plants, to parts of plants or to the area under cultivation.

9. The use of a silicone-based defoamer from the group of the linear polydimethylsiloxanes having an average dynamic viscosity, measured at 25°C, in the range from 1000 to 8000 mPas and containing silica as a defoamer for liquid aqueous formulations of saltlike water-soluble active crop protectant ingredients containing anionic surfactants.

10. The use of a composition as claimed in any one of claims 1 to 6 in crop protection or for applications on uncultivated land.

## Revendications

1. Agents phytoprotecteurs aqueux liquides, **caractérisés en ce qu'**ils contiennent
(a) 1 à 40 % en poids d'un ou de plusieurs agents actifs phytoprotecteurs solubles dans l'eau (agents actifs de type (a)),
(b) 0 à 40 % en poids d'un ou de plusieurs agents actifs phytoprotecteurs insolubles dans l'eau (agents actifs de type (b)),
(c) 0 à 50 % en poids de solvants organiques polaires,
(d) 1 à 80 % en poids de tensioactifs anioniques,
(e) 0 à 20 % en poids de tensioactifs non ionogènes, cationiques et/ou zwitterioniques,
(f) 0,02 à 10 % en poids d'antimousses à base de silicone du groupe des polydiméthylsiloxanes linéaires ayant une viscosité dynamique moyenne, mesurée à 25 °C, dans la plage allant de 1 000 à 8 000 mPas et présentant une teneur en silice,
(g) 0 à 30 % en poids d'autres adjuvants de formulation usuels, et
(h) 0,1 à 90 % en poids d'eau.

2. Agents phytoprotecteurs selon la revendication 1, **caractérisés en ce qu'**ils contiennent
(a) 1 à 40 % en poids d'agents actifs solubles dans l'eau du type (a) mentionné,
(c) 0 à 40 % en poids de solvants organiques polaires,
(d) 3 à 80 % en poids de tensioactifs anioniques,
(e) 0 à 20 % en poids de tensioactifs non ionogènes, cationiques et/ou zwitterioniques,
(f) 0,02 à 10 % en poids de l'antimousse ayant une teneur en silice,
(g) 0 à 30 % en poids d'adjuvants de formulation usuels,
(h) 0,1 à 90 % en poids d'eau.

3. Agents phytoprotecteurs selon l'une quelconque des revendications 1 ou 2, **caractérisés en ce que** l'agent actif de type (a) est le glufosinate-ammonium.

4. Agents phytoprotecteurs selon l'une quelconque des revendications 1 à 3, **caractérisés en ce que** le rapport en poids entre les herbicides (a) et les tensioactifs anioniques mentionnés en (d) est, par rapport à la substance détergente respective (WAS), dans la plage allant de 1:0,1 à 1:10.

5. Agents phytoprotecteurs selon l'une quelconque des revendications 1 à 4, **caractérisés en ce que** le rapport en poids entre les herbicides (a) et les antimousses mentionnés en (f) est dans la plage allant de 1 000:1 à 1:1.

6. Agents phytoprotecteurs selon l'une quelconque des revendications 1 à 5, **caractérisés en ce que** le rapport en poids entre les tensioactifs anioniques (d) et les antimousses mentionnés en (f) est dans la plage allant de 2 000:1 à 1:1.

7. Procédé de fabrication d'un agent phytoprotecteur défini selon l'une quelconque des revendications 1 à 6, **caractérisé en ce que** les composants (a) à (g) et éventuellement des composants supplémentaires contenus dans la formulation sont mélangés avec de l'eau (composant (h)).

8. Procédé de lutte contre une végétation indésirable, **caractérisé en ce qu'**une quantité efficace d'un agent phytoprotecteur selon l'une quelconque des revendications 1 à 6, qui contient un ou plusieurs agents actifs herbicides, est appliquée sur les plantes, les parties de plantes ou la surface de culture.

9. Utilisation d'un antimousse à base de silicone du groupe des polydiméthylsiloxanes linéaires ayant une viscosité dynamique moyenne, mesurée à 25 °C, dans la plage allant de 1 000 à 8 000 mPas et présentant une teneur en silice, en tant qu'antimousse pour formulations aqueuses liquides d'agents actifs phytoprotecteurs solubles dans l'eau de type sels ayant une teneur en tensioactifs anioniques.

10. Utilisation d'agents selon l'une quelconque des revendications 1 à 6 dans la protection des plantes ou pour des applications sur une terre non cultivée.
